# EUROPÄISCHE PATENTSCHRIFT

(11) **EP 1 747 382 B1**
(45) Veröffentlichungstag und Bekanntmachung des Hinweises auf die Patenterteilung: **18.04.2012**
(21) Anmeldenummer: 05715475.9
(22) Anmeldetag: 23.02.2005
(51) Int. Cl.: F16C 23/10

(54) **Elektrischer Servoantrieb für eine Kraftfahrzeugservolenkung, mit einem Kugellager mit exzentrischem Aussenring**
Electrical servo-drive for the power assisted steering of a vehicle, having a ball bearing comprising an eccentric outer ring
Servomoteur électrique pour direction assistée d'un véhicule, ledit servomoteur comprenant un palier à billes ayant une bague extérieure excentrique

(30) Priorität: 24.03.2004 DE 102004014810
(43) Veröffentlichungstag der Anmeldung: 31.01.2007
(73) Patentinhaber: ThyssenKrupp Presta SteerTec GmbH, 40476 Düsseldorf (DE)
(72) Erfinder: HECK, Hubert, 40629 Düsseldorf (DE); KIFORIUK, Alexander, 73061 Ebersbach an der Fils (DE)
(74) Vertreter: Lenzing Gerber Stute
(86) Internationale Anmeldenummer: PCT/EP2005/001884
(87) Internationale Veröffentlichungsnummer: WO 2005/095809

(56) Entgegenhaltungen:
- DE-A1- 2 058 111
- DE-A1- 4 012 936
- FR-A- 575 321
- GB-A- 836 869
- US-A- 4 035 044
- US-B1- 6 357 313

## Beschreibung

Die vorliegende Erfindung betrifft einen elektrischen Servoantrieb für eine Kraftfahrzeugservolenkung.

Bei der Montage von Wellen und in deren Betrieb werden beispielsweise bei Druckereimaschinen Gleitlager verwendet, die einen Außenring mit einer äußeren umfangfläche aufweisen, welche exzentrisch zu der Lagerfläche angeordnet ist. Eine derartige Lagerung ist beispielsweise aus der EP 0 076 789 A1 bekannt. Diese Lagerung wird für umlaufende Wellen verwendet. Sie ist nachteilig, wenn eine Welle häufig zum Stillstand kommt, weil Gleitlager ein hohes Anlaufmoment aufweisen. Sie erfordern weiter grundsätzlich eine kontinuierliche Schmierung und eine Überwachung im Betrieb.

Das Dokument US 6 357 313 B1 offenbart einen elektrischen Servoantrieb nach dem Oberbegriff des Anspruchs 1.

Entsprechende Lager für Getriebewellen, deren Drehsinn sich im Betrieb häufig ändert, und die über die Lebensdauer des Getriebes wartungsfrei sind, sind nicht bekannt.

Es ist deshalb Aufgabe der vorliegenden Erfindung, einen elektrischen Servoantrieb mit einem geeigneten möglichst wartungsfreien Lager zu schaffen.

Diese Aufgabe wird durch einen elektrischen Servoantrieb mit den Merkmalen des Anspruchs 1 sowie durch ein Verfahren mit den Merkmalen des Anspruchs 5 gelöst.

Weil das Lager ein Wälzlager ist, können Lagerungen von Wellen der beschriebenen Art ausgeführt werden, ohne dass bei einem Anlaufen nach vorübergehendem Stillstand eine erhöhte Reibung auftritt.

Das Lager kann ein Rillenkugellager sein. Bei der Lagerung von Getriebewellen vorzugsweise ein Radial-Rillenkugellager ist.

Der Eingriff von Verzahnungen in einem Getriebe lässt sch besonders genau einstellen, wenn das Lager eine Exzentrizität im Bereich von 10µm bis 200µm aufweist.

Die Einstellung der Lage des Außenrings wird vereinfacht, wenn der Außenring Aussparungen für den Eingriff eines Werkzeugs aufweist, vorzugsweise wenigstens zwei parallel zur Drehachse orientierte Stirnlöcher, Nuten oder sonstige Ausnehmungen. Bei einer anderen Ausführungsform können Vorsprünge wie Zapfen oder Nasen vorgesehen sein, die für einen Werkzeugeingriff geeignet sind.

Erfindungsgemäß ist auch ein Verfahren zur spielfrei einstellbaren Lagerung einer Getriebewelle eines elektrischen Servoantriebs für Kraftfahrzeugservolenkungen.

Nachfolgend wird ein Ausführungsbeispiel der vorliegenden Erfindung anhand der Zeichnung beschrieben. Es zeigen:

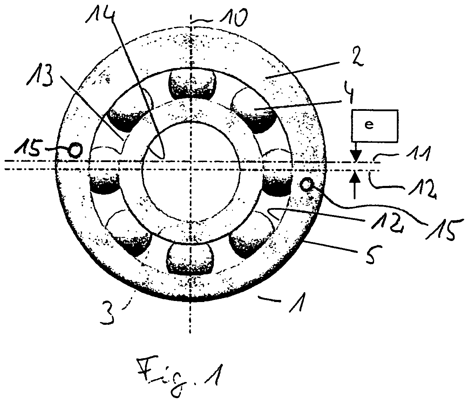

- Fig. 1:: ein Rillenkugellager mit einem exzentrischen Außenring.

Die Figur 1 zeigt ein Rillenkugellager 1 mit einem Außenring 2 und einem Innenring 3, zwischen denen Lagerkugeln 4 angeordnet sind. Der Außenring 2 weist eine äußere Umfangsfläche 5 auf, die kreisringförmig ausgeführt ist und die rotationssymmetrisch zum Schnittpunkt von zwei Achsen 10 und 11 ist. Weiter weist der Außenring 2 eine innere Umfangsfläche 12 auf, die ebenfalls kreisringförmig ausgeführt ist, jedoch rotationssymmetrisch zum Schnittpunkt der Achsen 10 und 12. Die äußere Umfangsfläche 5 und die innere Umfangsfläche 12 sind folglich um einen Betrag e, der dem Abstand der beiden erwähnten Schnittpunkte 10,11 bzw. 10, 12 entspricht, exzentrisch zueinander.

Die innere Umfangsfläche 12, die über den Umfang gleichmäßig verteilen Kugeln 4, sowie der Innenring 3 mit einer äußeren Lauffläche 13 und einer inneren Umfangfläche 14 sind ebenfalls rotationssymmetrisch zu dem Schnittpunkt der Achsen 10 und 12 angeordnet, so dass sie ein Radial-Rillenkugellager bilden.

Der Außenring 2 weist weiter zwei Ausnehmungen in Form von Stirnlöchern 15 auf, die einander gegenüberliegend auf der Stirnseite des Außenrings 2 angeordnet sind und die senkrecht zur Zeichenebene als Sackbohrungen in den Außenring 2 eingebracht sind.

Die erfindungsgemäße Anwendung ist ein Schneckenradgetriebe, das von einem Elektromotor angetrieben wird, dessen Motorwelle eine Schnecke trägt. Die Schnecke ist in einem nicht dargestellten Getriebegehäuse in einem konventionellen Kugellager und einem erfindungsgemäßen Kugellager 1 drehbar gelagert.

Die Schnecke kämmt mit einem Schneckenrad, welches ebenfalls in dem Getriebegehäuse mit einem Kugellager und einem entsprechenden zweiten Kugellager auf der dem Betrachter abgewandten Seite gelagert ist.

Bei derartigen Getrieben mit sich kreuzenden und in einem gemeinsamen Gehäuse gelagerten Wellen ist eine Einstellung des Spiels zwischen der Schnecke und dem Schneckenrad bislang nicht möglich. Diese Getriebe werden deshalb durch möglichst passgenaue Selektion der miteinander kämmenden Elemente weitestgehend spielfrei gefertigt. Dazu ist eine Vermessung und Klassifizierung der Schnecke und des Schneckenrades üblich. Dieses Verfahren ist sehr aufwändig und führt nicht immer zu einem vollständig spielfreien Lauf des Eingriffs. Ein spielfreier Lauf ist aber insbesondere bei Getrieben, die häufig die Laufrichtung wechseln, die Ursache von nachteiliger Geräuschentwicklung.

Durch Verwendung des Lagers 1 kann nun im Rahmen der üblichen Fertigungspräzision jede Schnecke mit jedem Schneckenrad in das Getriebe eingesetzt werden. Bei der Montage wird das exzentrische Kugellager 1 in einen speziellen Sitz des Getriebegehäuses eingesetzt, in dem es zum einen von der dem Elektromotor abgewandten Seite her zugänglich ist und zum anderen mit seinem Außenring 2 zunächst noch drehbar sitzt. Zur Einstellung des Spiels des Eingriffs zwischen der Schnecke und dem Schneckenrad kann nun ein Stirnlochschlüssel in die Stirnlöcher 15 eingesetzt werden und der Außenring 2 in dem Sitz des Getriebegehäuses verdreht werden. Diese Drehung bewirkt eine geringe Lageveränderung der Schnecke und wird so lange durchgeführt, bis entweder das gemessene Spiel zwischen der Schnecke und dem Schneckenrad den gewünschten Wert aufweist oder aber bis die durch Drehung der Schnecke zu ermittelnde Reibung in dem Eingriff einen vorbestimmten Wert erreicht, der anzeigt, dass der Eingriff spielfrei ist. In dieser Position wird der Außenring 2 in seinem Sitz fixiert. Dieses Fixieren kann durch eine Klemmung nach Art einer das Lager 1 umschlingenden Schelle erfolgen. Es kann auch vorgesehen sein, dass das Lager 1 mit einem Klebstoff eingesetzt wird, der zunächst für die Zeit des Einstellvorgangs noch flüssig bzw. pastös bleibt und der nach einer angemessenen Zeit aushärtet und so den Lagersitz fixiert.

Diese besonders genaue spielfreie Einstellung des beschriebenen Schneckenradgetriebes ist durch Verwendung des Lagers 1 erstmals möglich. Die Exzentrizität e des Lagers 1 liegt dabei je nach Anwendungsart beispielsweise im Bereich zwischen 10µm und 200µm.

Erfindungsgemäß wird das Kugellager bei einem Schneckengetriebe angewendet, das bei einem elektrischen Servoantrieb für eine Kraftfahrzeugservolenkung verwendet wird. Bei derartigen Lenkungen ist bei Geradeausfahrt häufig ein Zustand zu berücksichtigen, in den nur sehr geringe Lenkausschläge erfolgen. Dieses Pendeln um die Nullage macht sich in dem Getriebe dadurch bemerkbar, dass nur sehr geringe Drehwinkel mit häufig wechselndem Drehsinn auftreten. Selbst das geringste Spiel zwischen den beiden miteinander kämmenden Bauelementen führt in diesem Betriebszustand zu einer Geräuschentwicklung, die unerwünscht ist. Diese ist mit dem erfindungsgemäßen elektrischen Servoantrieb zu beseitigen.

## Patentansprüche

1. Elektrischer Servoantrieb für eine Kraftfahrzeugservolenkung, mit einem Elektromotor und mit einem eine Schnecke und ein Schneckenrad umfassenden Schneckengetriebe, wobei die Schnecke in einem Getriebegehäuse in einem ersten Kugellager (1), das von der dem Elektromotor abgewandten Seite her zugänglich ist, und einem zweiten Kugellager drehbar gelagert ist, wobei das erste Kugellager (1) einen Außenring (2) und einen Innenring (3) aufweist, zwischen denen Lagerkugeln (4) angeordnet sind, wobei das zweite Kugellager ein konventionelles Kugellager ist, **dadurch gekennzeichet,** dass das erste Kugellager dergestalt ist, dass der Außenring (2) des ersten Kugellagers (1) eine innere kreisringförmige Lagerfläche (12) und eine äußere kreisringförmige Umfangsfläche (5) aufweist, wobei die Umfangfläche (5) exzentrisch zu der Lagerfläche (12) angeordnet ist, und wobei das erste Kugellager (1) mit dem Außenring (2) in einem Sitz des Getriebegehäuses angeordnet ist.

2. Servoantrieb nach Anspruch 1, **dadurch gekennzeichnet, dass** die Exzentrizität (e) im Bereich von 10µm bis 200µm liegt.

3. Servoantrieb nach einem der vorhergehenden Ansprüche,
**dadurch gekennzeichnet, dass** das Lager (l) von seiner dem Elektromotor abgewandten Seite her für eine Spieleinstellung zugänglich ist.

4. Servoantrieb nach einem der vorhergehenden Ansprüche,
**dadurch gekennzeichnet , dass** der Außenring (2) des Lagers (1) nach der Spieleinstellung mit einem Klebstoff in dem Getriebegehäuse dauerhaft fixiert ist.

5. Verfahren zur Spieleinstellung eines elektrischen Servoantriebs für eine Kraftfahrzeugservolenkung, mit einem Elektromotor und mit einem eine Schnecke und ein Schneckenrad umfassenden Schneckengetriebe, wobei die Schnecke in einem Getriebegehäuse in einem ersten von der dem Elektromotor abgewandten Seite her zugänglichen Kugellager (1) und einem zweiten konventionellen Kugellager drehbar gelagert ist, und wobei das erste Lager (l) mit einem Außenring (2) versehen ist, der eine innere kreisringförmige Lagerfläche (12) und eine äußere kreisringförmige Umfangsfläche (5) aufweist, zwischen denen Lagerkugeln (4) angeordnet sind, wobei die Umfangsfläche (5) exzentrisch zu der Lagerfläche (12) angeordnet ist, wobei der Außenring (2) in d.em Sitz des Getriebegehäuses verdreht wird, bis die durch Drehung der Schnecke zu ermittelnde Reibung in dem Eingriff einen vorbestimmten Wert erreicht, der anzeigt, dass der Eingriff spielfrei ist.

6. Verfahren nach Anspruch 5, **dadurch gekennzeichnet , dass** der Außenring (2) des Lagers (1) mit einem Klebstoff in das Getriebegehäuse eingesetzt wird, der nach der Spieleinstellung aushärtet und den Außenring in dem Getriebegehäuse dauerhaft fixiert.

## Claims

1. Electrical servo drive for a power steering system of a motor vehicle, with an electric motor and a worm and a worm wheel, comprising worm gearing, wherein the worm is rotatably mounted in a gear housing in a first ball bearing (1) which is accessible from the side facing away from the electric motor, and in a second ball bearing, wherein the first ball bearing (1) has an outer ring (2) and an inner ring (3), between which bearing balls (4) are arranged, wherein the second ball bearing is a conventional ball bearing **characterised in that** the first ball bearing is designed in such a way that the outer ring (2) of the first ball bearing (1) has an inner circular ring-shaped bearing surface (12) and an outer circular ring-shaped circumferential surface (5), wherein the circumferential surface (5) is arranged eccentrically to the bearing surface (12), and wherein the first ball bearing (1) is arranged with the outer ring (2) in a seat of the gear housing.

2. Servo drive according to claim 1, **characterised in that** the eccentricity (e) is in the range from 10µm to 200µm.

3. Servo drive according to any one of the preceding claims, **characterised in that** the bearing (1) is accessible from the side facing away from the electric motor for a play adjustment.

4. Servo drive according to any one of the preceding claims, **characterised in that** the outer ring (2) of the bearing (1), following the play adjustment, is durably fixed in the gear housing by means of an adhesive.

5. Method for the play adjustment of an electrical servo drive for a power steering system of a motor vehicle, with an electric motor and a worm and a worm wheel, comprising worm gearing, wherein the worm is rotatably mounted in a gear housing in a first ball bearing (1) accessible from the side facing away from the electric motor, and a second conventional ball bearing, and wherein the first bearing (1) is provided with an outer ring (2), which has an inner circular ring-shaped bearing surface (12) and an outer circular ring-shaped circumferential surface (5), between which bearing balls (4) are arranged, wherein the circumferential surface (5) is arranged eccentrically to the bearing surface (12), wherein the outer ring (2) is rotated in the seat of the gear housing until the friction in the engagement determined by the rotation of the worm reaches a predetermined value which indicates that the engagement is free from play.

6. Method according to claim 5, **characterised in that** the outer ring (2) of the bearing (1) is inserted into the gear housing with an adhesive, which hardens following the play adjustment and durably fixes the outer ring in the gear housing.

## Revendications

1. Entrainement d'assistance électrique pour un système de direction assistée de véhicule automobile, comprenant un moteur électrique et un système de transmission à vis sans fin englobant une vis sans fin et une roue tangente, la vis sans fin étant montée en rotation dans un carter de transmission dans un premier roulement à billes (1), qui est accessible à partir du côté opposé à celui où se trouve le moteur électrique, et dans un deuxième roulement à billes, le premier roulement à billes (1) présentant une bague extérieure (2) et une bague intérieure (3) entre lesquelles sont agencées des billes de roulement (4), et le deuxième roulement à billes étant un roulement à billes conventionnel, **caractérisé en ce que** le premier roulement à billes est configuré de façon à ce que la bague extérieure (2) du premier roulement à billes (1) présente une surface de roulement intérieure (12) de forme annulaire circulaire et une surface périphérique extérieure (5) de forme annulaire circulaire, la surface périphérique (5) étant agencée de manière excentrée par rapport à la surface de roulement (12), et le premier roulement à billes (1) étant agencé avec sa bague extérieure (2) sur une portée du carter de transmission.

2. Entraînement d'assistance selon la revendication 1, **caractérisé en ce que** l'excentricité (e) se situe dans une plage de 10µm à 200µm.

3. Entraînement d'assistance selon l'une des revendications précédentes, **caractérisé en ce que** le roulement (1) est accessible à partir de son côté opposé à celui où se trouve le moteur électrique, pour un réglage de jeu.

4. Entraînement d'assistance selon l'une des revendications précédentes, **caractérisé en ce que** la bague extérieure (2) du roulement (1) est fixée à l'aide d'une colle dans le carter de transmission, après le réglage de jeu.

5. Procédé pour régler le jeu d'un entraînement d'assistance électrique pour un système de direction assistée de véhicule automobile, comprenant un moteur électrique et un système de transmission à vis sans fin englobant une vis sans fin et une roue tangente, la vis sans fin étant montée en rotation dans un carter de transmission dans un premier roulement à billes (1), qui est accessible à partir du côté opposé à celui où se trouve le moteur électrique, et dans un deuxième roulement à billes conventionnel, et le premier roulement à billes (1) étant pourvu d'une bague extérieure (2), qui présente une surface de roulement intérieure (12) de forme annulaire circulaire et une surface périphérique extérieure (5) de forme annulaire circulaire, entre lesquelles sont agencées des billes de roulement (4), la surface périphérique (5) étant agencée de manière excentrée par rapport à la surface de roulement (12), le procédé consistant à faire tourner la bague extérieure (2) sur la portée du carter de transmission, jusqu'à ce que le frottement dans l'engrènement, à déterminer par la rotation de la vis sans fin, atteigne une valeur prédéterminée indiquant que l'engrènement est exempt de jeu.

6. Procédé selon la revendication 5, **caractérisé en ce que** la bague extérieure (2) du roulement (1) est insérée dans le carter de transmission avec une colle, qui durcit après le réglage du jeu et fixe ainsi de manière permanente la bague extérieure dans le carter de transmission.
